# EUROPÄISCHE PATENTSCHRIFT

(11) **EP 4 159 408 B1**
(45) Veröffentlichungstag und Bekanntmachung des Hinweises auf die Patenterteilung: **26.02.2025**
(21) Anmeldenummer: 22208072.3
(22) Anmeldetag: 13.11.2017
(51) Int. Cl.: B29C 49/64, B29C 49/42, B29C 49/06, B29L 31/00

(54) **VORRICHTUNG ZUM ERWÄRMEN VON KUNSTSTOFFVORFORMLINGEN MIT ABSCHIRMPLATTE**
DEVICE FOR HEATING PLASTIC PREFORMS, HAVING A SHIELDING PLATE
DISPOSITIF DE CHAUFFAGE D'ÉBAUCHES EN PLASTIQUE DOTÉES D'UNE PLAQUE DE BLINDAGE

(30) Priorität: 11.11.2016 DE 102016121685
(43) Veröffentlichungstag der Anmeldung: 05.04.2023
(62) Teilanmeldung aus: 17818046.9
(73) Patentinhaber: Krones AG, 93073 Neutraubling (DE)
(72) Erfinder: Steiner, Andreas, 93073 Neutraubling (DE); Reiner, Roland, 93073 Neutraubling (DE)
(74) Vertreter: Hannke Bittner & Partner mbB Regensburg

(56) Entgegenhaltungen:
- WO-A1-2017/140660
- AT-U1- 520
- FR-A1- 2 950 284

## Beschreibung

Die vorliegende Erfindung bezieht sich auf eine Vorrichtung ein Verfahren zum Erwärmen von Kunststoffvorformlingen. Im Stand der Technik ist es bekannt, dass Kunststoffvorformlinge zu Kunststoffbehältnissen umgeformt, beispielsweise streckblasgeformt, werden. Zu diesem Zweck werden die Kunststoffvorformlinge zunächst erwärmt und dann in einem erwärmten Zustand in die eigentliche Umformungseinrichtung gefahren. Zum Erwärmen der Kunststoffvorformlinge werden im Stand der Technik teilweise Mikrowellenöfen, üblicherweise jedoch auch Infrarotöfen verwendet.

Durch diese Öfen werden die Kunststoffvorformlinge in einer aufrecht stehenden Position gefahren, damit die Grundkörper der Kunststoffvorformlinge für den späteren Streckvorgang erwärmt werden. Die Kunststoffvorformlinge weisen jedoch auch Gewindebereiche auf, die nicht erwärmt werden sollen. Ohne entsprechende Einrichtungen könnte es zu einer übermäßigen Erwärmung der Gewindebereiche kommen, welche wiederum für die Weiterverarbeitung schädlich ist.

Daher sind aus dem Stand der Technik Abschirmplatten bekannt, welche üblicherweise an den Halterungen montiert sind und welche eine übermäßige Erwärmung gerade der Gewindebereiche und insbesondere der Tragringe verhindern sollen. Die Kunststoffvorformlinge werden im Stand der Technik üblicherweise gegriffen und durch Öffnungen dieser Abschirmplatten verfahren bzw. innerhalb derselben bewegt. Dies führt jedoch im Stand der Technik dazu, dass diese Abschirmplatten in jedem Fall einen größeren Querschnitt aufweisen müssen wie der größte Querschnitt der Kunststoffvorformlinge, der üblicherweise in einem Bereich des Tragrings der Kunststoffvorformlinge liegt. Auf diese Weise wiederum entstehen vergleichsweise große Spalte zwischen den Kunststoffvorformlingen und den jeweiligen Abschirmplatten, durch welche gleichwohl Wärme treten kann.

Mit anderen Worten führt der im Stand der Technik bestehende Lichtspalt zwischen der Abschirmplatte und dem Tragring der Kunststoffvorformlinge immer noch zu einer gewissen Überhitzung des Tragrings. Dies wiederum kann bei der nachfolgenden Verarbeitung beispielsweise durch eine Blasformmaschine zu Problemen mit einem Blasdrüsenabdruck führen, welcher in dem Tragring entstehen kann.

Derartige Abschirmeinrichtungen sind dabei beispielswiese aus WO 2017/140 660 A1, FR 2 950 284 A1, AT 000 520 U1, US 7,121,821 B1, WO 2015/181 738 A1 oder auch US 5,066,222 bekannt.

In der WO 2017/140 660 A1 wird dabei beispielsweise eine Wärmeabschirmeinrichtungen mit zwei Wärmeabschirmelementen offenbart, welche bezüglich einander bewegbar sind. Aus der AT 000 520 U1 ist beispielsweise eine Vorrichtung zur Herstellung von Hohlkörpern aus rohrförmigen, thermoplastischen Vorformlingen bekannt, wobei die Vorformlinge durch eine Heizvorrichtung transportiert werden und anschließend einer Blasvorrichtung zugeführt werden. Weiterhin ist aus der FR 2 950 284 A1 eine Schutzeinrichtung zum thermischen Schutz eines Neckbereichs eines Vorformlings bekannt, wenn die Vorformlinge entlang eines vorgegebenen Transportpfads durch einen Ofen transportiert werden.

Der vorliegenden Erfindung liegt daher die Aufgabe zugrunde, eine verbesserte Abschirmung von Wärme zu ermöglichen, welche auch den Tragring und/oder das Gewinde der Kunststoffvorformlinge in besserer Weise schont als dies im Stand der Technik erreicht wird. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge wenigstens abschnittsweise entlang eines vorgegebenen Transportpfads transportiert. Dabei weist diese Transporteinrichtung eine Vielzahl von Halteeinrichtungen zum Halten der Kunststoffvorformlinge auf. Weiterhin weist die Vorrichtung eine Erwärmungseinrichtung auf, um die Kunststoffvorformlinge wenigstens zeitweise während ihres Transports mit der Transporteinrichtung zu erwärmen, wobei die Vorrichtung wenigstens eine Wärmeabschirmungseinrichtung aufweist, welche dazu geeignet und bestimmt ist, einer Erwärmung von Mündungsbereichen der Kunststoffvorformlinge entgegenzuwirken.

Erfindungsgemäß weisen die Wärmeabschirmungseinrichtungen zumindest ein erstes Wärmeabschirmelement und ein zweites Wärmeabschirmelement auf, welche bezüglich einander bewegbar sind und welche in wenigstens einer Relativposition zueinander einen Abschnitt des zu erwärmenden Kunststoffvorformlings in dessen Umfangsrichtung wenigstens teilweise und bevorzugt im Wesentlichen umgeben. Bevorzugt weisen die Wärmeabschirmungseinrichtungen auch jeweils ein erstes Wärmeabschirmelement und ein zweites Wärmeabschirmelement auf.

Im Gegensatz zu den einteilig ausgebildeten Wärmeabschirmungsplatten aus dem Stand der Technik wird im Rahmen der Erfindung vorgeschlagen, dass diese zweiteilig ausgebildet sind und bezüglich einander bewegbar sind. Auf diese Weise ist es möglich, dass diese Abschirmelemente präziser bzw. näher an die Kunststoffvorformlinge zugestellt werden und auf diese Weise auch das Auftreten von Lichtspalten zwischen dem Kunststoffvorformling und dem Querschnitt der Abschirmplatte reduziert werden kann. Auf diese Weise kann auch eine ungewollte Erwärmung der Mündungsbereiche der Kunststoffvorformlinge reduziert werden.

Unter einer Wärmeabschirmungseinrichtung wird im Rahmen der vorliegenden Erfindung insbesondere eine Einrichtung verstanden, welche dazu geeignet und bestimmt ist, einen Richtung der Mündungen der Kunststoffvorformlinge verlaufenden Wärmestrom zumindest teilweise zu unterbrechen.

Unter einem im Wesentlichen Umgeben oder auch größtenteils Umgeben der Kunststoffvorformlinge wird ein Umgeben um wenigstens 160° , bevorzugt um wenigstens 180°, bevorzugt um wenigstens 200°, bevorzugt um wenigstens 220°, bevorzugt um wenigstens 240°, bevorzugt um wenigstens 260°, bevorzugt um wenigstens 280°, bevorzugt um wenigstens 300°, bevorzugt um wenigstens 320° und besonders bevorzugt um wenigstens 340° und besonders bevorzugt um wenigstens 350° verstanden. Bevorzugt ist es dabei möglich, dass die beiden Abschirmelemente gemeinsam den Kunststoffvorformling vollständig beziehungsweise bis auf einen allenfalls geringen Spalt umgeben. Vorteilhaft bilden die beiden Abschirmelemente ein Loch bzw. insbesondere ein wenigstens teilweise kreisförmiges Loch aus, welches insbesondere an die Außenkonturen des Kunststoffvorformlings angepasst wird, sodass ein Spalt zwischen dem Kunststoffvorformling und den beiden Abschirmelementen gering ist.

Bei einer weiteren vorteilhaften Ausführungsform ist eine Vielzahl von Heizelementen seitlich neben dem Transportpfad der Kunststoffvorformlinge angeordnet. Bevorzugt sind diese Heizelemente insbesondere in einem Bereich angeordnet, in dem die Kunststoffvorformlinge geradlinig gefördert werden.

Bei einer weiteren vorteilhaften Ausführungsform ist wenigstens ein Abschirmelement und sind bevorzugt beide Abschirmelemente durch eine Bewegung auf den Kunststoffvorformling zustellbar, welche senkrecht zu einer Längsachse des Kunststoffvorformlings erfolgt. Vorteilhaft sind die Abschirmelemente unterhalb eines Tragrings des Kunststoffvorformlings auf diesen zustellbar. Dies bedeutet, dass der Tragring des Kunststoffvorformlings selbst nicht mehr erwärmt wird. Dabei werden die Abschirmelemente bevorzugt in einer horizontalen Richtung bewegt.

Bei einer weiteren vorteilhaften Ausführungsform ist eine Bewegungseinrichtung vorgesehen, welche die Abschirmelemente seitlich bzw. mit einer Bewegungskomponente senkrecht zur Längsrichtung des Kunststoffvorformlings zustellen kann. Besonders bevorzugt erfolgt jedoch die besagte Zustellbewegung durch eine Transportkette oder ein anderes umlaufendes Transportmittel (wie etwa ein Band), an dem die Abschirmelemente angeordnet sind. Dabei ist es denkbar, dass bei einem geradlinigen Verlauf dieses Transportmittels auch die einzelnen Abschirmelemente aufeinander zugestellt sind und bei einem gekrümmten Verlauf (etwa um ein Umlenkrad herum) die einzelnen Abschirmelemente sich auseinander bewegen. Es wäre jedoch auch eine Zustellung der Abschirmelemente durch einen eigenen Antrieb denkbar. Dabei wäre es auch denkbar dass diese oder allgemein eine Bewegungseinrichtung aus einer Gruppe von Bewegungseinrichtungen ausgewählt ist, welche Führungskurven, elektrische Bewegungseinrichtungen, pneumatische Bewegungseinrichtungen und hydraulische Bewegungseinrichtungen enthält.

Bei einer vorteilhaften Ausführungsform weisen diese Halteeinrichtungen Dorne auf, welche in Mündungen der Kunststoffvorformlinge einführbar sind. An diesen Dornen werden die Kunststoffvorformlinge gehalten. Vorteilhaft handelt es sich bei diesen Halteeinrichtungen um aktive Halteeinrichtungen, welche einen Griff der Kunststoffvorformlinge aktivieren und deaktivieren können.

Bei einer weiteren vorteilhaften Ausführungsform sind diese Dorne drehbar ausgeführt, sodass während der Erwärmung der Kunststoffvorformlinge auch eine Drehung derselben bezüglich ihrer Längsrichtung möglich ist.

Bei einer weiteren vorteilhaften Ausführungsform ist bevorzugt jeder Halteeinrichtung wenigstens eine und bevorzugt genau eine oder genau zwei Wärmeabschirmelemente zugeordnet. Vorteilhaft ist es auch möglich, dass jeder Halteeinrichtung Aufnahmesegmente von zwei benachbarten Wärmeabschirmelementen zugeordnet sind. Vorteilhaft sind auch jedem Kunststoffvorformling Aufnahmesegmente von zwei benachbarten Wärmeabschirmelementen zugeordnet. Bei einer weiteren vorteilhaften Ausführungsform weist die Transporteinrichtung ein umlaufendes Transportmittel und insbesondere eine umlaufende Transportkette auf. An dieser Transportkette können auch die Halteeinrichtungen zum Halten der Kunststoffvorformlinge angeordnet sein und weiterhin sind bevorzugt auch die Abschirmelemente an diesem umlaufenden Transportmittel angeordnet. Bevorzugt wird jeder Kunststoffvorformling (bzw. dessen Gewindebereich) von genau zwei aufeinander folgenden Abschirmelementen abgeschirmt.

Bei einer weiteren vorteilhaften Ausführungsform ist es möglich, dass die Abschirmeinrichtungen an derselben Halteeinrichtung wie die zuvor erwähnten Greifelemente beziehungsweise die zuvor erwähnten Dorne angeordnet sind. Dabei wäre es denkbar, dass zumindest ein oder aber auch beide Wärmeabschirmelemente, also entweder das erste oder das zweite oder auch beide Wärmeabschirmelemente, an der gleichen Halteeinrichtung wie die Dorne angeordnet sind. Somit wäre es möglich, dass sowohl die Halteeinrichtung zum Halten der Kunststoffvorformlinge als auch die Abschirmeinrichtung mittels der gleichen Halteeinrichtung an der Transportkette angeordnet sind. Bevorzugt ist wenigstens eine Abschirmeinrichtung an derselben Halteeinrichtung wie die Greifelemente angeordnet, bevorzugt sind mehrere Abschirmeinrichtungen an denselben Halteeinrichtungen wie die Greifelemente angeordnet und besonders bevorzugt sind alle Abschirmeinrichtungen an denselben Halteeinrichtungen wie die Greifelemente angeordnet.

Bei einer weiteren vorteilhaften Ausführungsform ist ein Transportpfad, entlang dessen die Kunststoffvorformlinge bewegt werden, wenigstens abschnittsweise gekrümmt und bevorzugt auch abschnittsweise geradlinig. Bevorzugt sind die Abschirmeinrichtungen derart ausgeführt, dass diese in einem geradlinigen Abschnitt des Transportpfads geschlossen sind und sich Kunststoffvorformlinge in einem Erwärmungszustand in den Abschirmelementen befinden.

Bevorzugt sind benachbarte Abschirmelemente in den gekrümmten Bereichen des Transportpfads voneinander getrennt.

Bevorzugt erfolgt in einem gekrümmten Abschnitt des Transportpfads der Kunststoffvorformlinge eine Zuführung derselben. Bevorzugt erfolgt auch in einem gekrümmten Abschnitt eine Entnahme der Kunststoffvorformlinge. Bevorzugt erfolgt sowohl die Zuführung als auch die Entnahme der Kunststoffvorformlinge in dem gleichen gekrümmten Abschnitt des Transportpfads. Bei einer weiteren vorteilhaften Ausführungsform sind auch die Abschirmelemente an der Transporteinrichtung angeordnet.

Bei einer weiteren vorteilhaften Ausführungsform sind die Wärmeabschirmelemente plattenartig ausgebildet. Dabei ist es möglich, dass diese Platten jeweils unterhalb der Tragringe der Kunststoffvorformlinge an diese zugestellt werden.

Bei einer weiteren vorteilhaften Ausführungsform weist wenigstens ein Wärmeabschirmelement eine erste Ausnehmung zur Aufnahme wenigstens eines Abschnitts des Kunststoffvorformlings auf.

Bei einer weiteren vorteilhaften Ausführungsform ist wenigstens ein Wärmeabschirmelement und sind die Wärmeabschirmelemente aus einem reflektierendem Material (insbesondere aus einem (wärme-)strahlungsreflektierenden und/oder wärmereflektierenden) Material gestaltet.

Bei einer weiteren vorteilhaften Ausführungsform ist wenigstens ein Wärmeabschirmelement und sind bevorzugt die Wärmeabschirmelemente aus einem Material gestaltet, welches dazu geeignet und bestimmt ist, IR - Strahlung zu absorbieren. Besonders bevorzugt ist wenigstens ein Wärmeabschirmelement und sind bevorzugt die Wärmeabschirmelemente aus einer Aluminiumlegierung wie beispielsweise Niro hergestellt. Alternativ oder zusätzlich wäre es auch möglich, dass als Material für das oder die Wärmeabschirmelemente ein poliertes Material verwendet wird.

Bei dieser Ausnehmung handelt es sich besonders bevorzugt um eine Mulde, in welche ein Abschnitt des Kunststoffvorformlings und insbesondere ein Abschnitt dessen Grundkörpers eintreten kann. Vorteilhaft weist diese Mulde dabei ein kreissegmentförmiges Profil auf. Auf diese Weise kann der Kunststoffvorformling sehr nahe an die jeweilige Mulde heranreichen bzw. das Wärmeabschirmelement kann sehr nahe auf den Kunststoffvorformling zugestellt werden. Besonders bevorzugt ist ein Krümmungsradius dieser Ausnehmung an einen Außenumfang des zu erwärmenden Kunststoffvorformlings angepasst. Dabei ist es möglich, dass dieser Krümmungsradius geringfügig größer ist als ein entsprechender Krümmungsradius des Kunststoffvorformlings, sodass gleichwohl das Abschirmelement sehr nahe an den Kunststoffvorformling zugestellt werden kann.

Bei einer weiteren vorteilhaften Ausführungsform weist wenigstens ein Abschirmelement eine zweite Ausnehmung zur Aufnahme eines Abschnitts des oder eines weiteren Kunststoffvorformlings auf. Bei dieser Ausführungsform weist wenigstens ein Abschirmelement zwei derartige Ausnehmungen auf. Vorteilhaft sind diese beiden Ausnehmungen in der Transportrichtung bzw. entlang des Transportpfads der Kunststoffvorformlinge an einander gegenüberliegenden Seiten angeordnet. Dabei ist es möglich, dass die erste Aufnahmeeinrichtung Bereiche eines ersten Kunststoffvorformlings aufnimmt und die zweite Aufnahmeausnehmung Bereiche eines zweiten Kunststoffvorformlings, welche insbesondere benachbart zueinander bzw. hintereinander transportiert werden. Daher werden durch ein bestimmtes Abschirmelement bevorzugt Abschnitte zweier aufeinander folgender Kunststoffvorformlinge abgeschirmt.

Bei einer weiteren vorteilhaften Ausführungsform sind die erste Ausnehmung des ersten Abschirmelements und die zweite Ausnehmung des zweiten Abschirmelements derart ausgebildet, dass sie wenigstens zeitweise zusammenwirken, um einen Abschnitt des Kunststoffvorformlings in dessen Umfangsrichtung im Wesentlichen zu umgeben. Bei dieser Ausführungsform wird insbesondere vorgeschlagen, dass zwei benachbarte Abschirmelemente derart aufeinander zugestellt werden, dass sie den Kunststoffvorformling während seiner Erwärmung umgeben.

Bei einer vorteilhaften Ausführungsform weist wenigstens ein Abschirmelement eine erste Ausnehmung zur Aufnahme eines Abschnitts eines ersten Kunststoffvorformlings auf, sowie eine zweite Ausnehmung zur Aufnahme eines Abschnitts eines zweiten Kunststoffvorformlings. Vorteilhaft handelt es sich hierbei um benachbart zueinander transportierte Kunststoffvorformlinge.

Bei einer weiteren vorteilhaften Ausführungsform sind wenigstens zwei Wärmeabschirmelemente gleichartig ausgebildet. Insbesondere weisen die beiden Wärmeabschirmelemente eine gleiche geometrische Ausgestaltung auf. Bevorzugt sind insbesondere auch zwei zum Umgeben eines gleichen Kunststoffvorformlings zusammenwirkende Abschirmelemente gleichartig ausgebildet. Vorteilhaft sind auch zwei in einer Transportrichtung bzw. entlang des Transportpfads aufeinanderfolgende Abschirmelemente gleichartig ausgebildet. Bei einer weiteren vorteilhaften Ausführungsform sind sämtliche Abschirmelemente gleichartig ausgebildet.

Bei einer vorteilhaften Ausführungsform ist wenigstens eine der genannten Ausnehmungen dazu geeignet, den Kunststoffvorformling in dessen Umfangsrichtung in einem Winkel zu umgeben, der größer ist als 70°, bevorzugt größer als 90°, bevorzugt größer als 120°, bevorzugt größer als 140°, bevorzugt größer als 150°, bevorzugt größer als 160° und besonders bevorzugt größer als 170°. Alternativ oder zusätzlich ist wenigstens eine Ausnehmung dazu geeignet und bestimmt, den Kunststoffvorformling in dessen Umfangsrichtung in einem Winkel zu umgeben, der kleiner ist als 270°, bevorzugt kleiner als 250°, bevorzugt kleiner als 230°, bevorzugt kleiner als 210°, bevorzugt kleiner als 200° und besonders bevorzugt kleiner als 190°.

Bei einer weiteren vorteilhaften Ausführungsform ist in einem Zustand, in welchem die Ausnehmungen einen Kunststoffvorformling umgeben, eine von diesen Ausnehmungen umgebene Fläche kleiner oder gleich dem Querschnitt eines Tragrings dieses Kunststoffvorformlings. Durch diese Flächendimensionen bzw. auch durch diese konkrete Ausgestaltung der jeweiligen Abschirmelemente kann ein Spalt zwischen dem Kunststoffvorformling und dem Abschirmelement effizient verkleinert werden.

Die vorliegende Erfindung ist weiterhin auf Abschirmelement zum Abschirmen von Wärme von aufrecht transportierten Kunststoffvorformlingen gerichtet. Dieses Abschirmelement weist eine Halteeinrichtung auf, um das Abschirmelement wenigstens mittelbar an einer Transporteinrichtung zum Transportieren von Kunststoffvorformlingen zu befestigen, sowie eine erste Ausnehmung welche zur Aufnahme wenigstens eines Abschnitts eines ersten Kunststoffvorformlings geeignet und bestimmt ist, wobei diese Ausnehmung sich über einen Umfangswinkel von weniger als 180° erstreckt. Erfindungsgemäß weist das Abschirmelement eine zweite Ausnehmung auf, welche zur Aufnahme wenigstens eines Abschnitts eines zweiten Kunststoffvorformlings geeignet und bestimmt ist, wobei diese zweite Ausnehmung sich über einen Umfangswinkel von weniger als 180° erstreckt. Es wird also ein Abschirmelement vorgeschlagen, welches zur Aufnahme zweier Kunststoffvorformlinge und insbesondere zweier aufeinanderfolgender Kunststoffvorformlinge geeignet und bestimmt ist.

Vorteilhaft weist das Abschirmelement einen plattenförmigen Abschnitt auf, der unterhalb des Tragrings der Kunststoffvorformlinge einschiebbar ist.

Bei einer weiteren bevorzugten Ausführungsform weist wenigstens Ausnehmung ein kreissegmentförmiges Profil auf. Bevorzugt überstreichen beide Ausnehmungen gemeinsam betrachtet einen Winkel von mehr als 160°, bevorzugt von mehr als 180°, bevorzugt von mehr als 200°, bevorzugt von mehr als 220° und besonders bevorzugt von mehr als 240° und besonders bevorzugt von mehr als 260° und besonders bevorzugt von mehr als 300°. Bei einer weiteren bevorzugten Ausführungsform weisen die beiden Ausnehmungen in einander entgegengesetzte Richtungen. Bevorzugt sind diese beiden Ausnehmungen voneinander beabstandet. Bei einer weiteren vorteilhaften Ausführungsform weist die Halteeinrichtung wenigstens einen (und bevorzugt zwei) stangenartige Körper auf, welche an der Abschirmplatte (welche die Ausnehmungen aufweist) angeordnet, beispielsweise angeschraubt ist (sind). Bevorzugt ist dieser stangenartige Körper zwischen den beiden Ausnehmungen angeordnet.

Die vorliegende Erfindung ist weiterhin auf ein Verfahren zum Erwärmen von Kunststoffvorformlingen gerichtet, wobei die Kunststoffvorformlinge mittels einer Transporteinrichtung entlang eines vorgegebenen Transportpfads transportiert werden und während dieses Transports wenigstens zeitweise erwärmt werden. Weiterhin wird mittels Wärmeabschirmeinrichtungen einer Erwärmung von Mündungsbereichen der Kunststoffvorformlinge entgegengewirkt.

Dabei weisen erfindungsgemäß die Wärmeabschirmeinrichtungen wenigstens ein erstes Wärmeabschirmelement und ein zweites Wärmeabschirmelement auf, welche bezüglich einander bewegbar sind, und welche in wenigstens einer Relativposition zueinander einen Abschnitt des Kunststoffvorformlings in dessen Umfangsrichtung wenigstens teilweise und bevorzugt im Wesentlichen umgeben.

Vorteilhaft werden dabei die Kunststoffvorformlinge wenigstens abschnittsweise geradlinig gefördert und/oder wenigstens abschnittsweise entlang einer gekrümmten und insbesondere kreisförmig gekrümmten Bahn. Vorteilhaft werden auch die Wärmeabschirmelemente bezüglich einander bewegt. Dabei sind besonders bevorzugt diese Wärmeabschirmelemente an der Transporteinrichtung angeordnet und werden auch eben durch die Transporteinrichtung selbst aufeinander zubewegt oder voneinander entfernt. Dabei ist es möglich, dass zueinander benachbarte Wärmeabschirmelemente in den geradlinigen Abschnitten einen minimalen Abstand zueinander aufweisen und in den gekrümmten Abschnitten zumindest zeitweise einen maximalen Abschnitt.

Vorteilhaft bewegen sich zueinander benachbarte Abschirmelemente in der Art einer Zangenbewegung aufeinander zu bzw. voneinander weg. Bei einer weiteren vorteilhaften Ausführungsform werden die Kunststoffvorformlinge durch eine Bewegung in einer Richtung, welche senkrecht zu der Längsrichtung der Kunststoffvorformlinge steht zwischen zwei benachbarte Wärmeabschirmelemente eingeführt. Bevorzugt erfolgt auch die Entnahme der Kunststoffvorformlinge wieder durch eine entsprechende Bewegung senkrecht zur Längsrichtung der Kunststoffvorformlinge.

Weitere Vorteile und Ausführungsformen ergeben sich aus den beigefügten Zeichnungen:
Darin zeigen:
- Fig. 1: Eine schematische Darstellung einer Anlage zum Herstellen von Behältnissen;
- Fig. 2: Eine Detaildarstellung einer Transportvorrichtung zum Transportieren von Kunststoffvorformlingen;
- Fig. 3a und 3b: Zwei Darstellungen von Abschirmelementen;
- Fig. 4a und 4b: Zwei Darstellungen von an Halteeinrichtungen montierten Abschirmelementen;
- Fig. 5: Eine weitere Ansicht einer erfindungsgemäßen Vorrichtung;
- Fig. 6: Eine Darstellung zur Veranschaulichung der Abschirmelemente.

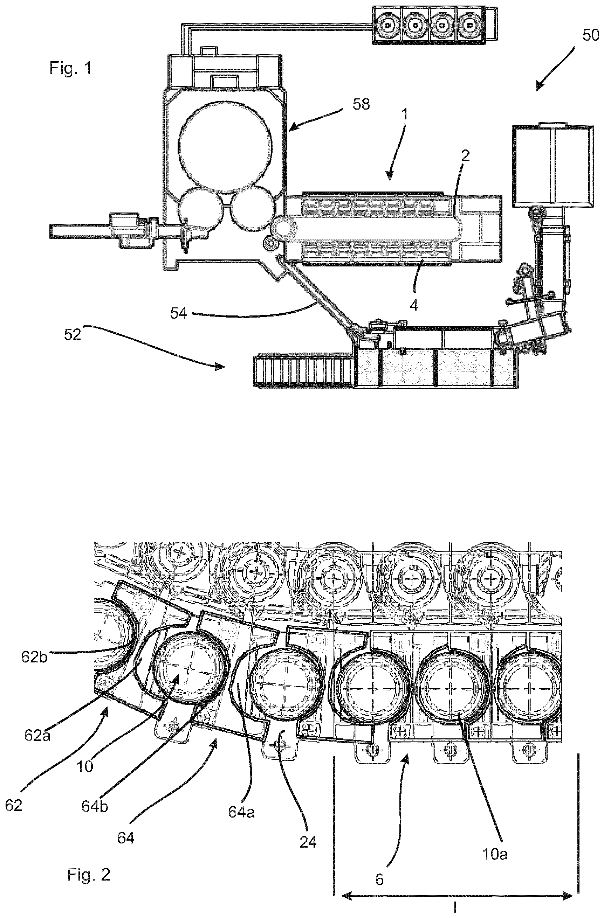

Figur 1 zeigt eine schematische Darstellung einer Anlage 50 zum Herstellen von Kunststoffbehältnissen. Dabei werden von einer Bevorratungseinrichtung 52 mittels einer Transporteinrichtung 54 Kunststoffvorformlinge zunächst einer Erwärmungsvorrichtung 1 zugeführt. Diese Erwärmungsvorrichtung 1 weist dabei eine mit 2 bezeichnete Transporteinrichtung zum Transportieren der Kunststoffvorformlinge auf sowie wenigstens eine Erwärmungseinrichtung 4, welche diese Kunststoffvorformlinge während deren Transport mit der Transporteinrichtung 2 erwärmt. Im Anschluss an die Erwärmungsvorrichtung 1 ist eine Umformungseinrichtung 58, wie beispielsweise eine Blasformmaschine, vorgesehen. Diese formt die erwärmten Kunststoffvorformlinge zu Kunststoffbehältnissen, insbesondere Kunststoffflaschen, um.

Figur 2 zeigt eine Detaildarstellung der Transportvorrichtung 1. Dabei ist eine Vielzahl von Abschirmelementen 62, 64 vorgesehen. Man erkennt, dass diese Abschirmelemente 62, 64 jeweils zum Abschirmen eines Mündungsbereichs 10a der einzelnen Kunststoffvorformlinge 10 dienen. Dabei sind die Abschirmelemente 62, 64 an Kettengliedern angeordnet und so beschaffen, dass diese sich zumindest während eines geradlinigen Transports in einem Abschnitt I der Transporteinrichtung aneinander anlegen.

Auf diese Weise ist es einerseits möglich, die Kunststoffvorformlinge in einem Umlenkbereich der Transporteinrichtung in einen Zwischenraum zwischen zwei benachbarten Halteelementen einzuführen und andererseits können diese auf geradliniger Strecke in günstiger Weise geschlossen werden. Man erkennt weiterhin, dass das Abschirmelement 62 eine erste Ausnehmung 62a sowie auch eine zweite Ausnehmung 62b aufweist. Ebenso weist auch das Abschirmelement 64 eine erste Ausnehmung 64a und eine zweite Ausnehmung 64b auf.

Das Bezugszeichen 6 kennzeichnet die Abschirmeinrichtung in ihrer Gesamtheit, das heißt hier die Gesamtheit aller einzelnen Abschirmelemente. In einem geschlossenen Zustand, das heißt insbesondere während des geradlinigen Transports dienen die Ausnehmung 62a des Abschirmelements 62 sowie die Ausnehmung 64b des danach folgenden Abschirmelements 64 dazu, um den Kunststoffvorformling in dessen Umfangsrichtung zu umgeben. Auf diese Weise ist es möglich, dass die Abschirmelemente einen kleineren Querschnitt ausbilden als beispielsweise der Tragring des Kunststoffvorformlings.

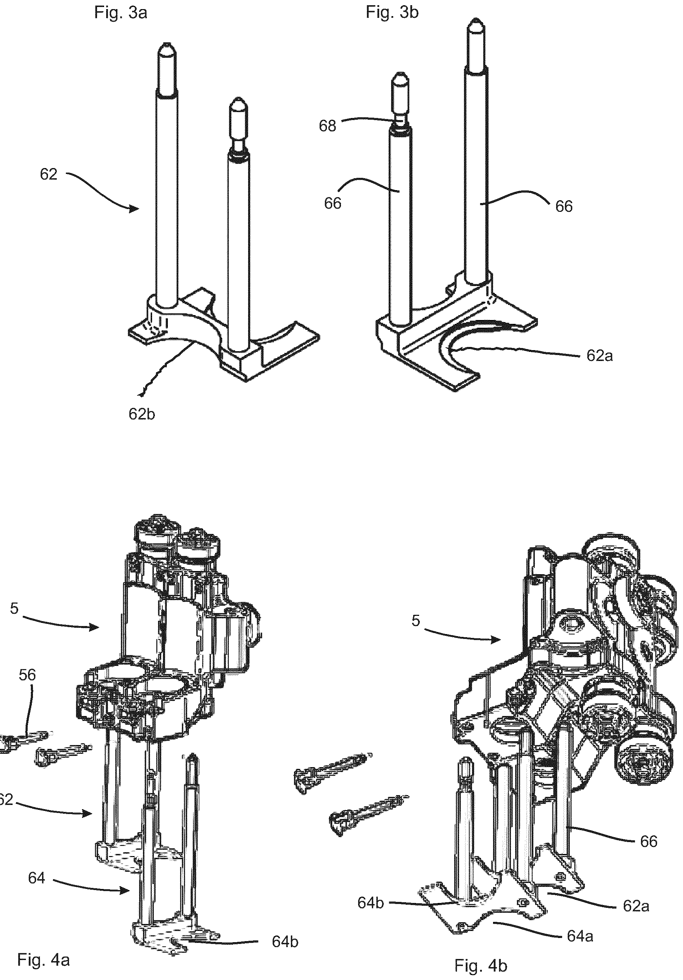

Die Figuren 3a und 3b zeigen zwei Darstellungen von Abschirmelementen 62. Man erkennt hier insbesondere die Ausnehmung 62b sowie die dieser gegenüberliegende Ausnehmung 62a. Die Bezugszeichen 66 kennzeichnen Trägereinrichtungen, mit denen das Abschirmelement an einer Halteeinrichtung befestigt werden kann. Das Bezugszeichen 68 kennzeichnet eine Ausnehmung zum Arretieren der Abschirmelemente an einer Halteeinrichtung. Auf diese Weise ist auch ein schneller Wechsel der Halteelemente möglich. Durch die Ausgestaltungen bzw. die zweiteilige Ausgestaltung der Abschirmelemente ist es möglich, dass während des Transportvorgangs die Halteelemente unterhalb des Tragrings eingeschoben werden. Dabei ist es möglich, dass ein sehr großer Umfangswinkel des Kunststoffvorformlings direkt durch die Abschirmelemente abgeschattet wird. In Experimenten konnte gezeigt werden, dass sich für die nachfolgende Blasformmaschine ein Blasdüsenabdruck erheblich verringert. Auch erlauben die hier beschriebenen Abschirmelemente einen günstigeren Halsauszug nach dem Erwärmungsprozess und auch mehr Prozessfreiheit wegen einer reduzierten Erwärmung der Mündungen der Kunststoffvorformlinge.

Die Figuren 4a und 4b zeigen eine Zusammensetzung einer Halteanordnung 5, an der ein Abschirmelement 62 angeordnet ist. Man erkennt, dass die Abschirmelemente 62 Einsteckelemente sind, welche in Bereiche der Halteeinrichtung 5 eingesteckt werden können. Die Bezugszeichen 52 kennzeichnen Befestigungsmittel, wie etwa Schrauben oder dergleichen, welche zum Halt der Abschirmelemente 62 dienen. Diese Halteanordnung weist auch (nicht gezeigt) die einzelnen Halteeinrichtungen zum Halten der Kunststoffvorformlinge auf. Diese Halteanordnung kann dabei an einer Transportkette, welche zum Transportieren der Kunststoffvorformlinge dient, angeordnet sein.

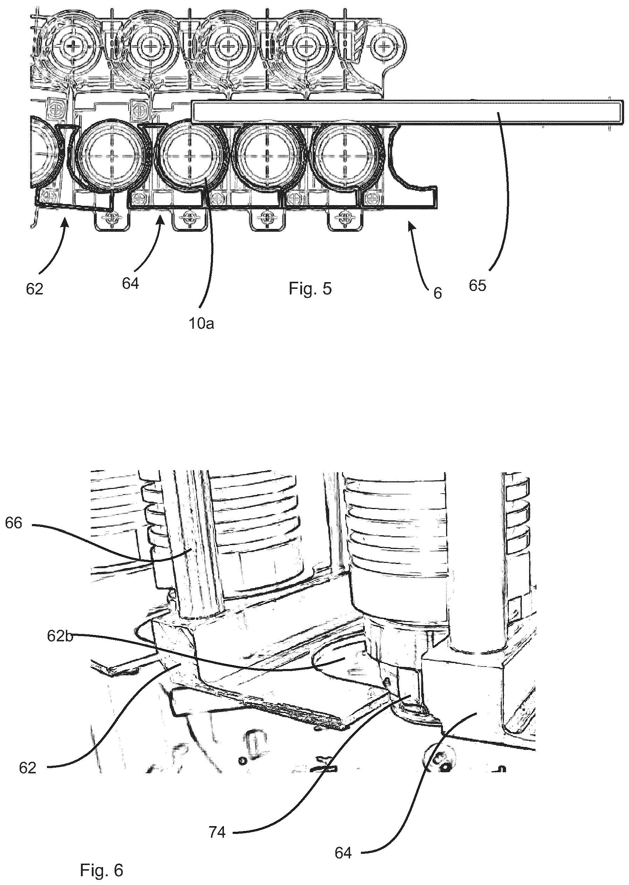

Figur 5 zeigt eine weitere Darstellung einer erfindungsgemäßen Vorrichtung. Hier erkennt man, dass die aufeinander folgenden Abschirmelemente 62 und 64 die Kunststoffvorformlinge noch nicht vollständig umgeben, sondern ein gewisser Winkelbereich leer bzw. nicht abgeschirmt bleibt. Bei dieser Ausgestaltung ist ein weiteres Abschirmelement 65 vorgesehen, welches hier in Form einer länglichen Platte ausgebildet ist und welches den verbleibenden Bereich in Umfangsrichtung um die Kunststoffvorformlinge abdeckt. In diesem Falle setzt sich die Abschirmeinrichtung 6 pro Kunststoffvorformling aus den beiden Abschirmelementen 62 und 64 und der erwähnten Abschirmplatte 65 zusammen. Diese Abschirmplatte 65 ist bevorzugt stationär angeordnet, das heißt die Kunststoffvorformlinge bewegen sich gegenüber dieser Abschirmplatte. Dahingegen bewegen sich die Abschirmelemente 62 und 64 mit den Kunststoffvorformlingen mit und sind damit besonders bevorzugt auch an der Transporteinrichtung 2, das heißt der Transportkette, angeordnet. Vorzugsweise sind wenigstens während des Transports der Kunststoffvorformlinge in einem geradlinigen Abschnitt die Abschirmelemente stationär gegenüber den Kunststoffvorformlingen angeordnet.

Figur 6 zeigt eine weitere Darstellung der erfindungsgemäßen Vorrichtung. Bei dieser Darstellung erkennt man neben den Ausnehmungen 62b und den Abschirmelementen 62 und 64 auch das Greifelement 74, welches in die Kunststoffvorformlinge eingreift, um diese zu halten. Dieses Greifelement ist hier als Dorn ausgebildet, der in die Mündungen der Kunststoffvorformlinge einführbar ist. Daneben ist auch wieder der Träger 66 zu erkennen, mittels dessen die Abschirmelemente an ihrer Halteeinrichtung befestigt werden. Diese Greifelemente sind daher die oben erwähnten Halteeinrichtungen zum Halten der Kunststoffvorformlinge.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Erwärmungsvorrichtung
- 2: Transporteinrichtung zum Transportieren der Kunststoffvorformlinge
- 4: Erwärmungseinrichtung
- 5: Halteeinrichtung
- 6: Abschirmeinrichtung
- 10: Kunststoffvorformlinge
- 10a: Mündungsbereich des Kunststoffvorformlings 10
- 50: Anlage zum Herstellen von Kunststoffbehältnissen
- 52: Bevorratungseinrichtung
- 54: Transporteinrichtung
- 56: Befestigungsmittel
- 58: Umformungseinrichtung
- 65: Abschirmplatte
- 66: Trägereinrichtungen
- 68: Ausnehmung zum arretieren der Abschirmelemente
- 74: Greifelement
- 62, 64: Abschirmelemente
- 62a: Erste Ausnehmung
- 62b: Zweite Ausnehmung
- 64a: Erste Ausnehmung
- 64b: Zweite Ausnehmung
- 66: Träger
- 74: Greifelement, Halteeinrichtung
- I: Abschnitt der Transporteinrichtung

## Patentansprüche

1. Vorrichtung (1) zum Erwärmen von Kunststoffvorformlingen (10) mit einer Transporteinrichtung (2), welche die Kunststoffvorformlinge (10) wenigstens abschnittsweise entlang eines vorgegebenen Transportpfads transportiert, wobei die Transporteinrichtung (2) eine Vielzahl von Halteeinrichtungen (74) zum Halten der Kunststoffvorformlinge (10) aufweist, mit einer Erwärmungseinrichtung (4), um die Kunststoffvorformlinge (10) wenigstens zeitweise während ihres Transports mit der Transporteinrichtung (2) zu erwärmen, wobei die Vorrichtung (1) wenigstens eine Wärmeabschirmeinrichtung (6) aufweist, welche dazu geeignet und bestimmt ist, einer Erwärmung von Mündungsbereichen (10a) der Kunststoffvorformlinge (10) entgegenzuwirken, **dadurch gekennzeichnet, dass**
die Wärmeabschirmeinrichtungen (6) zumindest ein erstes Wärmeabschirmelement (62) und ein zweites Wärmeabschirmelement (64) aufweisen, welche bezüglich einander bewegbar sind und welche in wenigstens einer Relativposition zueinander einen Abschnitt eines Kunststoffvorformlings (10) in dessen Umfangsrichtung wenigstens teilweise umgeben und wobei die Halteeinrichtungen (74) Dorne aufweisen, welche in Mündungen (10a) der Kunststoffvorformlinge (10) einführbar sind und diese Dorne drehbar ausgeführt sind, so dass während der Erwärmung der Kunststoffvorformlinge auch eine Drehung derselben bezüglich ihrer Längsrichtung möglich ist.

2. Vorrichtung (1) nach wenigstens einem der vorangegangenen Ansprüche,
**dadurch gekennzeichnet, dass**
es sich bei den Halteeinrichtungen (74) um aktive Halteeinrichtungen handelt, welche einen Griff der Kunststoffvorformlinge (10) aktivieren und deaktivieren.

3. Vorrichtung (1) nach wenigstens einem der vorangegangenen Ansprüche,
**dadurch gekennzeichnet, dass**
jeder Halteeinrichtung (74) wenigstens ein Wärmeabschirmelement (62, 64) zugeordnet.

4. Vorrichtung (1) nach wenigstens einem der vorangegangenen Ansprüche,
**dadurch gekennzeichnet, dass**
jeder Halteeinrichtung (74) genau zwei Wärmeabschirmelemente (62, 64) zugeordnet sind.

5. Vorrichtung (1) nach wenigstens einem der vorangegangenen Ansprüche,
**dadurch gekennzeichnet, dass**
beide Wärmeabschirmelemente (62, 64) durch eine Bewegung auf den Kunststoffvorformling (10) zustellbar sind, welche senkrecht zu einer Längsrichtung des Kunststoffvorformlings (10) erfolgt.

6. Vorrichtung (1) nach Anspruch 1,
**dadurch gekennzeichnet, dass**
die Wärmeabschirmelemente (62, 64) plattenartig ausgebildet sind.

7. Vorrichtung (1) nach wenigstens einem der vorangegangenen Ansprüche,
**dadurch gekennzeichnet, dass**
wenigstens ein Wärmeabschirmelement (62, 64) eine erste Ausnehmung (62a, 64a) zur Aufnahme wenigstens eines Abschnitts des Kunststoffvorformlings (10) aufweist.

8. Vorrichtung (1) nach wenigstens einem der vorangegangenen Ansprüche,
**dadurch gekennzeichnet, dass**
die Wärmeabschirmelemente (62, 64) aus einem reflektierendem Material gestaltet sind.

9. Vorrichtung (1) nach wenigstens einem der vorangegangenen Ansprüche,
**dadurch gekennzeichnet, dass**
die Wärmeabschirmelemente (62, 64) über eine schnellwechselbare Verbindung an den Halteeinrichtungen fixierbar sind.

10. Vorrichtung (1) nach Anspruch 7,
**dadurch gekennzeichnet, dass** wenigstens ein Wärmeabschirmelement (62, 64) eine zweite Ausnehmung (62b, 64b) zur Aufnahme eines Abschnitts des Kunststoffvorformlings (10) aufweist.

11. Vorrichtung (1) nach Anspruch 10,
**dadurch gekennzeichnet, dass**
die erste Ausnehmung (62a, 64a) des ersten Abschirmelements (62, 64) und die zweite Ausnehmung (62b, 64b) des zweiten Abschirmelements (64) derart ausgebildet sind, dass sie wenigstens zeitweise zusammenwirken um einen Abschnitt eines Kunststoffvorformlings in dessen Umfangsrichtung im Wesentlichen zu umgeben.

12. Vorrichtung (1) nach wenigstens einem der vorangegangenen Ansprüche,
**dadurch gekennzeichnet, dass**
wenigstens ein Wärmeabschirmelement (62, 64) eine erste Ausnehmung (62a, 64a) zur Aufnahme eines Abschnitts eines ersten Kunststoffvorformlings aufweist sowie eine zweite Ausnehmung (62b, 64b) zur Aufnahme eines Abschnitts eines zweiten Kunststoffvorformlings (10).

13. Vorrichtung (1) nach wenigstens einem der vorangegangenen Ansprüche,
**dadurch gekennzeichnet, dass**
wenigstens zwei Wärmeabschirmelemente (62, 64) gleichartig ausgebildet sind.

14. Vorrichtung (1) nach wenigstens einem der vorangegangenen Ansprüche 7 - 11,
**dadurch gekennzeichnet, dass**
wenigstens eine Ausnehmung (62a, 62b, 64a, 64b) dazu geeignet ist, den Kunststoffvorformling (10) in dessen Richtung in einem Winkel zu umgeben, der größer ist als 70°, bevorzugt größer als 90°, bevorzugt größer als 120°, bevorzugt größer als 140°, bevorzugt größer als 150°, bevorzugt größer als 160° und besonders bevorzugt größer als 170° und/oder dass wenigstens eine Ausnehmung (62a, 62b, 64a, 64b) dazu geeignet ist, den Kunststoffvorformling (10) in dessen Richtung in einem Winkel zu umgeben, der kleiner ist als 270°, bevorzugt kleiner als 250°, bevorzugt kleiner als 230°, bevorzugt kleiner als 210°.

15. Vorrichtung (1) nach wenigstens einem der vorangegangenen Ansprüche 9 - 12,
**dadurch gekennzeichnet, dass**
in einem Zustand, in welchem die Ausnehmungen einen Kunststoffvorformling (10) umgeben eine von diesen Ausnehmungen (62a, 64b) umgebene Fläche kleiner oder gleich dem Querschnitt eines Tragrings dieses Kunststoffvorformlings ist.

16. Vorrichtung (1) nach wenigstens einem der vorangegangenen Ansprüche,
**dadurch gekennzeichnet, dass**
die Wärmeabschirmelemente (62, 64) an derselben Halteeinrichtung wie die Halteeinrichtungen (74) angeordnet sind.

17. Abschirmelement (62, 64) zum Abschirmen von Wärme von aufrecht transportierten Kunststoffvorformlingen (10) mit einer Halteeinrichtung, um das Abschirmelement (62, 64) wenigstens mittelbar an einer Transporteinrichtung (2) zum Transportieren von Kunststoffvorformlingen, welche eine Vielzahl von Halteeinrichtungen (74) zum Halten der Kunststoffvorformlinge (10) aufweist, zu befestigen, mit einer ersten Ausnehmung (62a, 64a) welche zur Aufnahme wenigstens eines Abschnitts eines ersten Kunststoffvorformlings (10) geeignet und bestimmt ist, wobei diese Ausnehmung (64a) sich über einen Umfangswinkel von weniger als 180° erstreckt,
**dadurch gekennzeichnet, dass**
das Abschirmelement (62, 64) eine zweite Ausnehmung (62b, 64b) aufweist, welche zur Aufnahme wenigstens eines Abschnitts eines zweiten Kunststoffvorformlings geeignet und bestimmt ist, wobei diese zweite Ausnehmung (62b, 64b) sich über einen Umfangswinkel von weniger als 180° erstreckt und wobei die Halteeinrichtungen (74) Dorne aufweisen, welche in Mündungen (10a) der Kunststoffvorformlinge (10) einführbar sind und diese Dorne drehbar ausgeführt sind, so dass während der Erwärmung der Kunststoffvorformlinge auch ein Drehung derselben bezüglich ihrer Längsrichtung möglich ist.

18. Verfahren zum Erwärmen von Kunststoffvorformlingen (10), wobei die Kunststoffvorformlinge (10) mittels einer Transporteinrichtung (2), welche eine Vielzahl von Halteeinrichtungen (74) zum Halten der Kunststoffvorformlinge aufweist, entlang eines vorgegebenen Transportpfads transportiert werden und während dieses Transports wenigstens zeitweise erwärmt werden, wobei mittels einer Wärmeabschirmeinrichtung (6) einer Erwärmung von Mündungsbereichen (10a) der Kunststoffvorformlinge (10) entgegengewirkt wird,
**dadurch gekennzeichnet, dass**
die Wärmeabschirmeinrichtungen (6) jeweils ein erstes Wärmeabschirmelement (62) und ein zweites Wärmeabschirmelement (64) aufweisen, welche bezüglich einander bewegbar sind und welche in wenigstens einer Relativposition zueinander einen Abschnitt des Kunststoffvorformlings (10) in dessen Umfangsrichtung wenigstens teilweise umgeben und wobei die Halteeinrichtungen (74) Dorne aufweisen, welche in Mündungen (10a) der Kunststoffvorformlinge (10) einführbar sind und diese Dorne drehbar ausgeführt sind, so dass während der Erwärmung der Kunststoffvorformlinge auch ein Drehung derselben bezüglich ihrer Längsrichtung möglich ist.

## Claims

1. Apparatus (1) for heating plastic preforms (10), having a transport device (2) which transports the plastic preforms (10) at least in sections along a predetermined transport path, wherein the transport device (2) having a plurality of holding devices (74) for holding the plastic preforms (10), with a heating device (4) in order to heat the plastic preforms (10) at least temporarily during their transport with the transport device (2), wherein the apparatus (1) having at least one heat shielding device (6) which is suitable and intended for counteracting heating of mouth regions (10a) of the plastic preforms (10),
**characterized in that**
the heat shielding devices (6) have at least a first heat shielding element (62) and a second heat shielding element (64), which are movable relative to one another and which, in at least one relative position to one another, at least partially surround a portion of a plastic preform (10) in the circumferential direction thereof and wherein the holding devices (74) have mandrels, which can be inserted into openings (10a) of the plastic preforms (10) and these mandrels are designed to be rotatable, so that during the heating of the plastic preforms it is also possible to rotate them with respect to their longitudinal direction.

2. Apparatus (1) according to at least one of the preceding claims,
**characterized in that**
the holding devices (74) are active holding devices which activate and deactivate a grip of the plastic preforms (10).

3. Apparatus (1) according to at least one of the preceding claims,
**characterized in that**
at least one heat shielding element (62, 64) is assigned to each holding device (74).

4. Apparatus (1) according to at least one of the preceding claims,
**characterized in that**
exactly two heat shielding elements (62, 64) are assigned to each holding device (74).

5. Apparatus (1) according to at least one of the preceding claims,
**characterized in that**
both heat shielding elements (62, 64) can be fed to the plastic preform (10) by a movement which is perpendicular to a longitudinal direction of the plastic preform (10).

6. Apparatus (1) according to claim 1,
**characterized in that**
the heat shielding elements (62, 64) are plate-like.

7. Apparatus (1) according to at least one of the preceding claims,
**characterized in that**
at least one heat shielding element (62, 64) has a first recess (62a, 64a) for receiving at least one section of the plastic preform (10).

8. Apparatus (1) according to at least one of the preceding claims,
**characterized in that**
the heat shielding elements (62, 64) are made of a reflective material.

9. Apparatus (1) according to at least one of the preceding claims, **characterized in that**
the heat shielding elements (62, 64) can be fixed to the holding devices via a quick-change connection.

10. Apparatus (1) according to claim 7,
**characterized in that**
at least one heat shielding element (62, 64) has a second recess (62b, 64b) for receiving a section of the plastic preform (10).

11. Apparatus (1) according to claim 10,
**characterized in that**
the first recess (62a, 64a) of the first shielding element (62, 64) and the second recess (62b, 64b) of the second shielding element (64) are formed such that they cooperate at least temporarily to substantially surround a portion of a plastic preform in the circumferential direction thereof.

12. Apparatus (1) according to at least one of the preceding claims,
**characterized in that**
at least one heat shielding element (62, 64) has a first recess (62a, 64a) for receiving a section of a first plastic preform and a second recess (62b, 64b) for receiving a section of a second plastic preform (10).

13. Apparatus (1) according to at least one of the preceding claims,
**characterized in that**
at least two heat shielding elements (62, 64) are of the same design.

14. Apparatus (1) according to at least one of the preceding claims 7 - 11,
**characterized in that**
at least one recess (62a, 62b, 64a, 64b) is suitable for surrounding the plastic preform (10) in its direction at an angle which is greater than 70°, preferably greater than 90°, preferably greater than 120°, preferably greater than 140°, preferably greater than 150°, preferably greater than 160° and particularly preferably greater than 170° and/or that at least one recess (62a, 62b, 64a, 64b) is suitable for surrounding the plastic preform (10) in its direction at an angle which is less than 270°, preferably less than 250°, preferably less than 230°, preferably less than 210°.

15. Apparatus (1) according to at least one of the preceding claims 9 - 12,
**characterized in that**
in a state in which the recesses surround a plastic preform (10), an area surrounded by these recesses (62a, 64b) is smaller than or equal to the cross-section of a supporting ring of this plastic preform.

16. Apparatus (1) according to at least one of the preceding claims,
**characterized in that**
the heat shielding elements (62, 64) are arranged on the same holding device as the holding devices (74).

17. Shielding element (62, 64) for shielding heat from plastic preforms (10) transported in an upright position, with a holding device for fastening the shielding element (62, 64) at least indirectly to a transport device (2) for transporting plastic preforms, which has a plurality of holding devices (74) for holding the plastic preforms (10), having a first recess (62a, 64a) which is suitable and intended for receiving at least a portion of a first plastic preform (10), wherein this recess (64a) extending over a circumferential angle of less than 180°,
**characterized in that**
the shielding element (62, 64) has a second recess (62b, 64b) which is suitable and intended for receiving at least one portion of a second plastic preform, wherein this second recess (62b, 64b) extends over a circumferential angle of less than 180° and wherein the holding devices (74) have mandrels which can be inserted into mouths (10a) of the plastic preforms (10) and these mandrels are designed to be rotatable, so that during the heating of the plastic preforms it is also possible to rotate them with respect to their longitudinal direction.

18. Method for heating plastic preforms (10), wherein the plastic preforms (10) are transported along a predetermined transport path by a transport device (2), which has a plurality of holding devices (74) for holding the plastic preforms, and are heated at least temporarily during this transport, wherein heating of mouth regions (10a) of the plastic preforms (10) is counteracted by a heat shielding device (6),
**characterized in that**
the heat shielding devices (6) each have a first heat shielding element (62) and a second heat shielding element (64), which are movable relative to one another and which, in at least one relative position to one another, at least partially surround a portion of the plastic preform (10) in the circumferential direction thereof, and wherein the holding devices (74) have mandrels which can be inserted into mouths (10a) of the plastic preforms (10) and these mandrels are designed to be rotatable, so that during the heating of the plastic preforms it is also possible to rotate them with respect to their longitudinal direction.

## Revendications

1. Dispositif (1) de chauffage de préformes en matière plastique (10) avec un système de transport (2), qui transporte les préformes en matière plastique (10) au moins par endroits le long d'un trajet de transport prédéfini, dans lequel le système de transport (2) présente une pluralité de systèmes de maintien (74) pour maintenir les préformes en matière plastique (10), avec un système de chauffage (4) pour chauffer les préformes en matière plastique (10) au moins temporairement pendant leur transport avec le système de transport (2), dans lequel le dispositif (1) présente au moins un système de protection thermique (6), qui est adapté pour et se destine à contrer un chauffage de zones d'embouchure (10a) des préformes en matière plastique (10),
**caractérisé en ce que**
les systèmes de protection thermique (6) présentent au moins un premier élément de protection thermique (62) et un deuxième élément de protection thermique (64), qui peuvent être déplacés l'un par rapport à l'autre et qui entourent au moins en partie une section d'une préforme en matière plastique (10) dans son sens périphérique dans au moins une position relative l'un par rapport à l'autre et dans lequel les systèmes de maintien (74) présentent des mandrins, qui peuvent être introduits dans des embouchures (10a) des préformes en matière plastique (10) et lesdits mandrins sont réalisés de manière à pouvoir tourner de telle sorte que pendant le chauffage des préformes en matière plastique, une rotation de celles-ci est également possible par rapport à leur sens longitudinal.

2. Dispositif (1) selon au moins l'une quelconque des revendications précédentes,
**caractérisé en ce que**
les systèmes de maintien (74) sont des systèmes de maintien actifs, qui activent et désactivent une poignée des préformes en matière plastique (10).

3. Dispositif (1) selon au moins l'une quelconque des revendications précédentes,
**caractérisé en ce que**
au moins un élément de protection thermique (62, 64) est associé à chaque système de maintien (74).

4. Dispositif (1) selon au moins l'une quelconque des revendications précédentes,
**caractérisé en ce que**
précisément deux éléments de protection thermique (62, 64) sont associés à chaque système de maintien (74).

5. Dispositif (1) selon au moins l'une quelconque des revendications précédentes,
**caractérisé en ce que**
les deux éléments de protection thermique (62, 64) peuvent être approchés par un déplacement sur la préforme en matière plastique (10), qui s'effectue de manière perpendiculaire à un sens longitudinal de la préforme en matière plastique (10).

6. Dispositif (1) selon la revendication 1,
**caractérisé en ce que**
les éléments de protection thermique (62, 64) sont réalisés à la manière d'une plaque.

7. Dispositif (1) selon au moins l'une quelconque des revendications précédentes,
**caractérisé en ce que** au moins un élément de protection thermique (62, 64) présente un premier évidement (62a, 64a) destiné à recevoir au moins une section de la préforme en matière plastique (10).

8. Dispositif (1) selon au moins l'une quelconque des revendications précédentes, **caractérisé en ce que** les éléments de protection thermique (62, 64) sont réalisés à partir d'un matériau réfléchissant.

9. Dispositif (1) selon au moins l'une quelconque des revendications précédentes, **caractérisé en ce que** les éléments de protection thermique (62, 64) peuvent être fixés aux systèmes de maintien par l'intermédiaire d'une liaison à changement rapide.

10. Dispositif (1) selon la revendication 7, **caractérisé en ce que** au moins un élément de protection thermique (62, 64) présente un deuxième évidement (62b, 64b) destiné à recevoir une section de la préforme en matière plastique (10).

11. Dispositif (1) selon la revendication 10,
**caractérisé en ce que**
le premier évidement (62a, 64a) du premier élément de protection (62, 64) et le deuxième évidement (62b, 64b) du deuxième élément de protection (64) sont réalisés de manière à interagir au moins temporairement pour entourer sensiblement une section d'une préforme en matière plastique dans son sens périphérique.

12. Dispositif (1) selon au moins l'une quelconque des revendications précédentes,
**caractérisé en ce que**
au moins un élément de protection thermique (62, 64) présente un premier évidement (62a, 64a) destiné à recevoir une section d'une première préforme en matière plastique ainsi qu'un deuxième évidement (62b, 64b) destiné à recevoir une section d'une deuxième préforme en matière plastique (10).

13. Dispositif (1) selon au moins l'une quelconque des revendications précédentes,
**caractérisé en ce que**
au moins deux éléments de protection thermique (62, 64) sont de forme similaire.

14. Dispositif (1) selon au moins l'une quelconque des revendications 7 à 11 précédentes,
**caractérisé en ce que**
au moins un évidement (62a, 62b, 64a, 64b) est adapté pour entourer la préforme en matière plastique (10) dans son sens à un angle qui est supérieur à 70°, de manière préférée supérieur à 90°, de manière préférée supérieur à 120°, de manière préférée supérieure à 140°, de manière préférée supérieure à 150°, de manière préférée supérieure à 160° et de manière particulièrement préférée supérieure à 170° et/ou qu'au moins un évidement (62a, 62b, 64a, 64b) est adapté pour entourer la préforme en matière plastique (10) dans sa direction selon un angle, qui est inférieur à 270°, de manière préférée inférieur à 250°, de manière préférée inférieur à 230°, de manière préférée inférieur à 210°.

15. Dispositif (1) selon au moins l'une quelconque des revendications 9 à 12 précédentes,
**caractérisé en ce que**
dans un état, dans lequel les évidements entourent une préforme en matière plastique (10), une surface entourée par ces évidements (62a, 64b) est inférieure ou égale à la section transversale d'un anneau porteur de ladite préforme en matière plastique.

16. Dispositif (1) selon au moins l'une quelconque des revendications précédentes,
**caractérisé en ce que**
les éléments de protection thermique (62, 64) sont disposés sur le même système de maintien que les systèmes de maintien (74).

17. Élément de protection (62, 64) pour la protection thermique de préformes en matière plastique (10) transportées verticalement avec un système de maintien pour fixer l'élément de protection (62, 64) au moins indirectement sur un système de transport (2) pour le transport de préformes en matière plastique, qui présente une pluralité de systèmes de maintien (74) pour le maintien des préformes en matière plastique (10), avec un premier évidement (62a, 64a), qui est adapté pour et se destine à recevoir au moins une section d'une première préforme en matière plastique (10), dans lequel ledit évidement (64a) s'étend sur un angle périphérique inférieur à 180°,
**caractérisé en ce que**
l'élément de protection (62, 64) présente une deuxième évidement (62b, 64b), qui est adapté pour et se destine à recevoir au moins une section d'une deuxième préforme en matière plastique, dans lequel ledit deuxième évidement (62b, 64b) s'étend sur un angle périphérique inférieur à 180° et dans lequel les systèmes de maintien (74) présentent des mandrins, qui peuvent être introduits dans des embouchures (10a) des préformes en matière plastique (10) et lesdits mandrins sont réalisés de manière à pouvoir tourner, de telle sorte que pendant le chauffage des préformes en matière plastique, une rotation de celles-ci est également possible par rapport à leur sens longitudinal.

18. Procédé de chauffage de préformes en matière plastique (10), dans lequel les préformes en matière plastique (10) sont transportées le long d'un trajet de transport prédéfini au moyen d'un système de transport (2), qui présente une pluralité de systèmes de maintien (74) pour maintenir les préformes en matière plastique et sont chauffées au moins temporairement pendant ledit transport, dans lequel un système de protection thermique (6) permet de contrer un chauffage de zones d'embouchure (10a) des préformes en matière plastique (10),
**caractérisé en ce que**
les systèmes de protection thermique (6) présentent respectivement un premier élément de protection thermique (62) et un deuxième élément de protection thermique (64), qui peuvent être déplacés l'un par rapport à l'autre et qui entourent au moins en partie une section de la préforme en matière plastique (10) dans son sens périphérique dans au moins une position relative l'un par rapport à l'autre et dans lequel les systèmes de maintien (74) présentent des mandrins, qui peuvent être introduits dans des embouchures (10a) des préformes en matière plastique (10) et lesdits mandrins sont réalisés de manière à pouvoir tourner, de telle sorte que, pendant le chauffage des préformes en matière plastique, une rotation de celles-ci est également possible par rapport à leur sens longitudinal.
